# EUROPEAN PATENT APPLICATION

(11) **EP 4 741 112 A1**
(43) Date of publication of application: **13.05.2026**
(21) Application number: 25214372.2
(22) Date of filing: 07.11.2025
(51) Int. Cl.: B25J 9/16, B05B 13/04, B25J 11/00, B05B 12/08, B05B 12/12

(54) **PAINTING SYSTEM**

(30) Priority: 08.11.2024 JP 2024196036
(71) Applicant: ABB SCHWEIZ AG, 5400 Baden (CH)
(72) Inventor: IIDA, Kisumi, Tokyo, 1416022 (JP)
(74) Representative: Zimmermann & Partner Patentanwälte mbB

(57) **Abstract**

[Problem] To provide a painting system which makes it possible to improve painting quality even when vibration or other fluctuation occurs in an image acquisition means.

[Solution] The painting system 1 comprises: a painting head unit 50 comprising a painting head 53; a robot arm R1 that moves the painting head unit 50 to a desired position; an image acquisition means that acquires painting data of a painting portion; and a control unit that controls activation of a three-dimensional scanner 140 and controls activation of the painting head 53 and the robot arm R1, wherein the control unit activates the image acquisition means to scan an image for measurement with the image acquisition means prior to execution of painting, acquires measurement image data that reflects a vibration state of the image acquisition means, generates painting data for correction for the purpose of eliminating deviation in landing positions of droplets based on the measurement image data acquired by the image acquisition means, and performs driving control of the robot arm and the painting head based on the painting data for correction.

## Description

### [Technical field]

The present invention relates to a painting system.

### [Background art]

Robotic painting using robots has become the mainstream in painting lines for vehicles such as automobiles. As an example of a configuration relating to such robotic painting, for example, the following configuration is disclosed in patent document 1. In the painting robot disclosed in this patent document 1, a technique is disclosed whereby nozzle ejection defects are determined based on a test pattern having multiple check lines.

### [Prior art documents]

### [Patent documents]

[Patent document 1] Japanese Unexamined Patent Application Publication No. 2023-009853

### [Summary of the invention]

### [Problem to be solved by the invention]

In the configuration disclosed in patent document 1, it is disclosed that three-dimensional image data is generated based on imaging data obtained from multiple imaging units, but the disclosure does not extend to the aspect of eliminating ejection defects due to vibration or other fluctuation of the three-dimensional scanner. Here, if droplets are ejected from the painting head while the presence of fluctuation remains unknown, the droplets may land at positions that deviate from the original intended landing positions.

The present invention was made based on the circumstances described above, and it is an object of the present invention to provide a painting system that makes it possible to improve painting quality even if vibration or other fluctuation occurs in the image acquisition means.

### [Means for solving the problem]

To solve the aforementioned problem, according to a first aspect of the present invention, there is provided a painting system comprising a painting robot that performs painting on a painting portion of a vehicle, the painting system being characterized in that it comprises: a painting head unit comprising a painting head having multiple nozzles that eject droplets of a painting material; a robot arm which has the painting head unit mounted on its distal end and which moves the painting head unit to a desired position; an image acquisition means which acquires painting data of the painting portion on which painting has been performed with said painting head; and a control unit that controls activation of the image acquisition means and controls activation of said painting head and said robot arm based on said image data transmitted from said image acquisition means; wherein the control unit: activates the image acquisition means to acquire measurement image data that reflects a vibration state of said image acquisition means by scanning an image for measurement with the image acquisition means prior to execution of painting; generates painting data for correction based on the measurement image data acquired by the image acquisition means, for the purpose of eliminating deviation in the landing positions of the droplets ejected from the painting head; and performs driving control of the robot arm and the painting head based on the painting data for correction.

### [Advantageous effect of the invention]

According to the present invention, a painting system can be provided which makes it possible to improve painting quality even when vibration or other fluctuation occurs in the image acquisition means.

### [Brief description of the drawings]

[FIG. 1] is a schematic drawing illustrating the overall configuration of a painting robot according to an embodiment of the present invention.
[FIG. 2] is a drawing illustrating a schematic configuration of a painting system comprising the painting robot shown in FIG. 1.
[FIG. 3] is a drawing illustrating, in front view, a nozzle forming surface from which painting material is ejected in the painting head unit provided in the painting robot shown in FIG. 1.
[FIG. 4] is a plan view illustrating a configuration of a nozzle forming surface in another painting head unit different from the painting head unit shown in FIG. 3.
[FIG. 5] is a drawing illustrating the flow relating to control for generating painting data for correction during painting and performing painting with the painting robot shown in FIG. 1.
[FIG. 6] is a drawing illustrating an example of an image for measurement that is scanned by a three-dimensional scanner provided in the painting robot shown in FIG. 1.
[FIG. 7] is a drawing illustrating measurement image data obtained by scanning with the three-dimensional scanner provided in the painting robot shown in FIG. 1.
[FIG. 8] is a drawing illustrating painting data for correction generated based on the measurement image data shown in FIG. 7.
[FIG. 9] is a drawing illustrating nozzles for regular painting and nozzles for correction in the painting head provided in the painting robot shown in FIG. 1.

### [Modes for carrying out the invention]

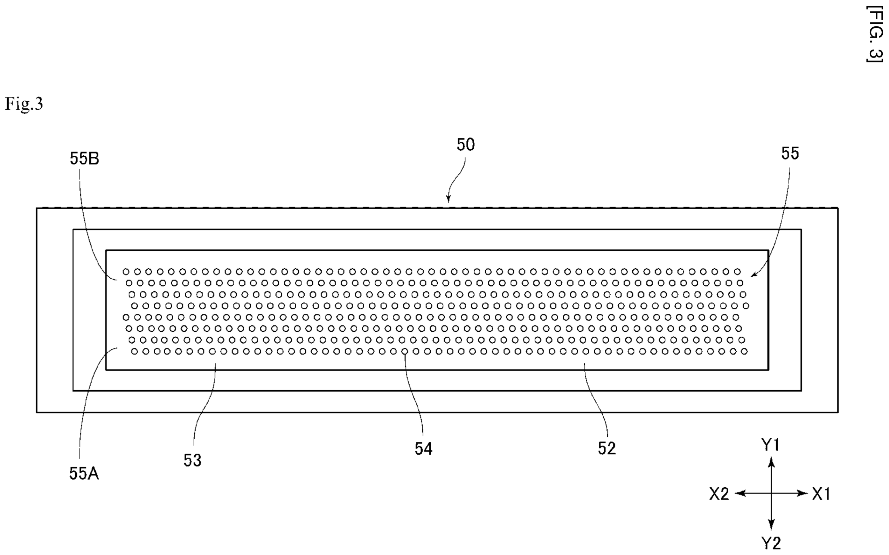

A painting system 1 and a painting robot 10 according to an embodiment of the present invention will be described below based on the drawings. It should be noted that, in the following description, as may be necessary, the X direction is assumed to be the long direction of the nozzle forming surface 52 (painting head 53), the X1 side is assumed to be the right side in FIG. 3, and the X2 side is assumed to be the left side in FIG. 3. Furthermore, the Y direction is assumed to be the short direction (width direction) of the nozzle forming surface 52 (painting head 53), the Y1 side is assumed to be the top side of the page in FIG. 3, and the Y2 side is assumed to be the bottom side of the page in FIG. 3.

### (1. Overview of the painting robot 10)

The painting robot 10 of the present embodiment performs "painting" on an object to be coated, such as a vehicle or vehicle component (in the following, a vehicle component constituting a portion of a vehicle will be described as a vehicle) located on a painting line in an automobile manufacturing plant, for the purpose of forming a painting film on the surface of the object to be coated so as to provide protection or improved appearance to that surface. Therefore, such a painting robot needs to perform painting, within a fixed period of time and at a desired painting quality, on vehicles that move along the painting line at predetermined intervals of time.

Furthermore, the painting robot 10 of the present embodiment can not only form a painting film as described above but can also form various types of designs and images on the object to be coated, such as a vehicle or vehicle component. It should be noted that the object to be coated is not limited to vehicles and vehicle components, and may be anything that needs to be coated, such as various types of non-automobile components (for example, exterior components for airplanes and rail transport).

### (1-1. Overall configuration of the painting system 1 and the painting robot 10)

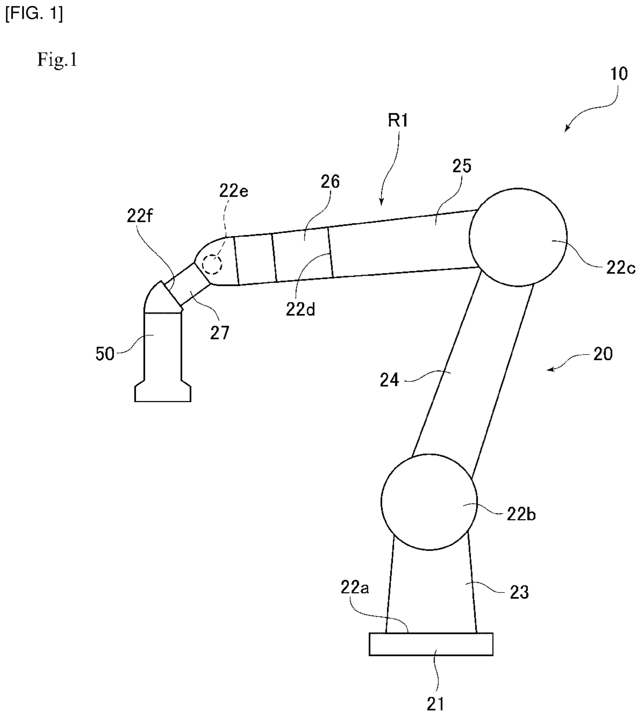

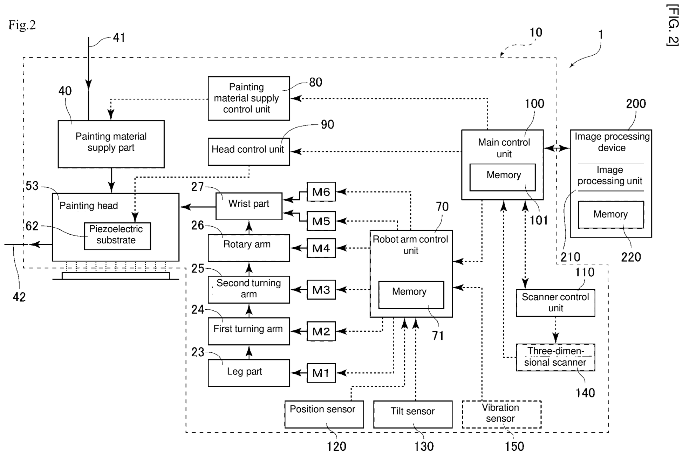

FIG. 1 is a schematic drawing illustrating the overall configuration of a painting robot 10 according to an embodiment of the present invention. FIG. 2 is a drawing illustrating a schematic configuration of a painting system 1 comprising the painting robot 10 shown in FIG. 1. As shown in FIG. 2, the painting system 1 comprises a painting robot 10 and an image processing device 200.

### (1-2. Painting robot 10)

As shown in FIG. 1, the painting robot 10 comprises a robot main body 20 and a painting head unit 50 as the main component elements. The painting robot 10 shown in FIG. 1 illustrates, as an example, a six-axis vertical articulated robot, but the painting robot 10 may be any type of robot, such as a vertical articulated type other than six-axis, a horizontal articulated type, a Cartesian coordinate robot, etc.

### (1-3. Robot main body 20)

As shown in FIG. 1, the robot main body 20 comprises a base 21, first to sixth axes of rotation 22a to 22f, a leg part 23, a first turning arm 24, a second turning arm 25, a rotary arm 26, a wrist part 27, and motors M1 to M6 for driving these, as the main component elements. It should be noted that the portion from the leg part 23 to the wrist part 27 corresponds to the robot arm R1, but other portions such as the base 21 may also correspond to the robot arm R1.

Among these, the base 21 is a portion which is installed at an installation location such as a floor surface, but this base 21 may also be capable of travel relative to the installation location. Furthermore, the leg part 23 is a portion erected so as to extend upward from the base 21, and is provided so as to be rotatable relative to the base 21 via the first axis of rotation 22a by driving with a motor M1 (see FIG. 2). It should be noted that the leg part 23 may also be configured so as not to rotate relative to the base 21.

Furthermore, at the upper end of the leg part 23, the first turning arm 24 is provided so as to be turnable via the second axis of rotation 22b by driving with a motor M2. Furthermore, on the distal end side of the first turning arm 24, a second turning arm 25 is provided so as to be turnable via a third axis of rotation 22c by driving with a motor M3.

Furthermore, on the distal end side of the second turning arm 25, a rotary arm 26 is provided so as to be rotatable about the central axis of the second turning arm 25. The rotary arm 26 is rotatable via a fourth axis of rotation 22d by driving with a motor M4. Furthermore, on the distal end side of the rotary arm 26, a wrist part 27 is provided. The wrist part 27 enables rotational movement about multiple (for example, two) axes of different orientation by driving with a motor M5 and motor M6. In FIG. 1, the axes of rotation about which the rotational movement is possible are designated as the fifth axis of rotation 22e and the sixth axis of rotation 22f, respectively. This makes it possible to control the orientation of the painting head unit 50 with good precision. It should be noted that the number of axes may be any number, provided that it is two or more.

Furthermore, the painting head unit 50 is attached to the wrist part 27, but the painting head unit 50 may be provided so as to be detachable from the wrist part 27.

### (1-4. Painting material supply part 40)

As shown in FIG. 2, the painting system 1 and the painting robot 10 are provided with a painting material supply part 40. The painting material supply part 40 is a part for supplying painting material to the painting head unit 50. To this end, the painting material supply part 40 comprises a supply passage 41 for supplying painting material from an unillustrated painting material storage part, an unillustrated pump, an unillustrated valve, etc., and a return flow passage 42 for recovering painting material that was not ejected.

It should be noted that when using a configuration in which painting material is supplied from outside the painting robot 10, the painting robot 10 need not comprise a portion for storing painting material, and a portion for storing painting material may be provided outside the painting robot 10.

### (1-5. Painting head unit 50)

Next, the painting head unit 50 will be described. FIG. 3 is a drawing illustrating, in front view, the state of the nozzle forming surface 52 from which painting material is ejected within the painting head unit 50. As shown in FIG. 3, the painting head unit 50 comprises an unillustrated head cover, and various components, such as the painting head 53, are housed inside this head cover. It should be noted that the painting head 53 is provided with numerous nozzles 54 for ejecting painting material.

As shown in FIG. 3, on the surface of the painting head 53 on the side that ejects the painting material (the nozzle forming surface 52), opening portions of the multiple nozzles 54 are exposed. It should be noted that in the following description, the opening portions of the nozzles 54 are also referred to as nozzles 54.

Furthermore, on the nozzle forming surface 52, there are provided multiple nozzle rows 55, in which nozzles 54 are arranged in a line tilted relative to the long direction of the painting head unit 50. In the present embodiment, the nozzle rows 55 comprise first nozzle rows 55A that are present on one side (the Y2 side) in the primary scanning direction (the Y direction), and second nozzle rows 55B that are present on the other side (the Y1 side) in the primary scanning direction.

It should be noted that, when ejecting painting material, the drive timing of the nozzles 54 is controlled such that droplets ejected from the nozzles 54 of the second nozzle rows 55B will land between the droplets ejected from adjacent nozzles 54 of the first nozzle rows 55A. As a result, the dot density during painting can be increased.

Furthermore, in the configuration shown in FIG. 3, the arrangement of the nozzles 54 in the first nozzle rows 55A and the arrangement of the nozzles 54 in the second nozzle rows 55B are tilted relative to the short direction (the Y direction; the primary scanning direction) of the painting head 53. However, such an arrangement of the nozzles 54 need not be employed. For example, the nozzle rows 55 may also be arranged along the short direction (the Y direction) of the painting head 53. Furthermore, in the short direction (the Y direction; the primary scanning direction) of the painting head 53, the nozzle rows 55 may be a single nozzle row 55 without being divided into the first nozzle rows 55A and the second nozzle rows 55B, or may be divided into three or more nozzle rows.

Inside the painting head 53 described above, a flow passage for feeding unillustrated painting material is provided. Furthermore, inside the painting head 53, an unillustrated nozzle pressurization chamber is provided, and on one of the wall surfaces of the nozzle pressurization chamber, a piezoelectric substrate 62 (see FIG. 2) is arranged for changing the volume of the nozzle pressurization chamber so as to eject painting material from the nozzles 54. Therefore, by applying voltage to the piezoelectric substrate 62 from outside, the piezoelectric substrate 62 is made to expand and contract so as to change the volume of the nozzle pressurization chamber, making it possible to eject the painting material from the nozzles 54.

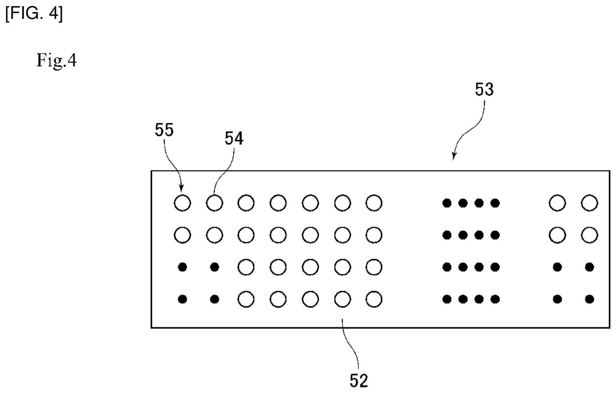

It should be noted that the painting head 53 is not limited to the configuration shown in FIG. 3. For example, as shown in FIG. 4, multiple nozzles 54 may be lined up in the short direction (width direction; Y direction) of the painting head 53 to form a nozzle row 55. Furthermore, when painting is to be performed on a vehicle using a painting head 53 as shown in FIG. 4, painting may also be carried out in a state where the long direction of the painting head 53 is slightly tilted relative to the primary scanning direction of the painting head 53.

For example, in the configuration of the painting head 53 shown in FIG. 3, assuming that the nozzle rows 55 are tilted relative to the primary scanning direction by an angle α, the long direction of the painting head 53 may also be tilted by an angle α relative to the primary scanning direction of the painting head 53. When tilting in this manner, painting equivalent to that of the painting head 53 shown in FIG. 3 can be achieved simply by adjusting the ejection timing of painting material from the nozzles 54.

### (1-6. Control system of the painting system 1)

Next, the control system for controlling the activation of the painting system 1 will be described. It should be noted that the control system described below corresponds to the control unit. As shown in FIG. 2, the painting robot 10 comprises a robot arm control unit 70, a painting material supply control unit 80, a head control unit 90, a main control unit 100, a scanner control unit 110, a position sensor 120, a tilt sensor 130, and a three-dimensional scanner 140. Furthermore, the painting robot 10 is connected to an image processing device 200, thereby forming the painting system 1. However, the painting robot 10 may be configured to have the functions of the image processing device 200.

It should be noted that the robot arm control unit 70, the painting material supply control unit 80, the head control unit 90, the main control unit 100, the scanner control unit 110, and an image processing unit 210 described later are composed of a CPU (Central Processing Unit), a storage unit (ROM (Read Only Memory), RAM (Random Access Memory), non-volatile memory, etc.) or other memory, and other elements. It should be noted that the image processing unit 210 may use a GPU (Graphics Processing Unit) together with or instead of a CPU having excellent image processing performance. It should be noted that the memory includes a memory 71 in the robot arm control unit 70 and a memory 101 in the main control unit 100, but the robot arm control unit 70 and the main control unit 100 may also comprise other memory.

The painting robot 10 also comprises various types of sensors (not illustrated), and outputs from these sensors are inputted to any of the robot arm control unit 70, the painting material supply control unit 80, the head control unit 90, and the main control unit 100. The various types of sensors include the position sensor 120, the tilt sensor 130, and the three-dimensional scanner 140 described above, and further include an acceleration sensor, an angular velocity sensor, an image sensor, and the like, but sensors other than these may also be used.

Among these, the robot arm control unit 70 is a portion that controls the driving of the motors M1 to M6 described above. The robot arm control unit 70 comprises a memory 71, and the memory 71 stores programs and data generated by robot teaching.

The robot arm control unit 70 controls the driving of the motors M1 to M6 based on the programs and data stored in the memory 71 and the image processing performed by the image processing unit 210 of the image processing device 200. This control makes it possible for the painting head unit 50 to pass through desired positions for performing painting at a desired speed or stop at a predetermined position.

The memory 71 stores data related to the trajectory of the painting head 53 (trajectory data) and attitude data related to the attitude, such as tilt, of the painting head 53, which are generated by robot teaching taking into account the painting width that can be coated by the painting head 53. It should be noted that the memory 71 may be provided in the painting robot 10, but the memory 71 may also be present outside the painting robot 10, and transmission and reception of information to and from the memory 71 may be enabled via wired or wireless communication means.

Furthermore, the painting material supply control unit 80 is a portion that controls the supply of painting material to the painting head unit 50, and specifically controls the activation of the pump, valve, etc., provided in the painting material supply part 40. It should be noted that the painting material supply control unit 80 preferably controls the activation of the pump and valve described above so that the painting material is supplied at a constant pressure to the painting head unit 50 to which the painting material is to be supplied.

Furthermore, the head control unit 90 is a portion that controls activation of the piezoelectric substrate 62 inside the painting head unit 50 based on image processing in the image processing unit 210. The head control unit 90 controls ejection of the painting material based on segmented painting data corresponding to the position and the painting path when a predetermined position in trajectory data is reached, using means for detecting position, such as a position sensor 120 and a tilt sensor 130, which will be described later. It should be noted that, in this case, the number of dots (number of droplets) ejected from the nozzles 54 is controlled by controlling the drive frequency of the piezoelectric substrate 62 so that the film thickness in the painting portion becomes uniform, or the size of the droplets ejected from the nozzles 54 is controlled by controlling the amount of deformation of the piezoelectric substrate 62 based on the drive frequency and/or voltage applied to the piezoelectric substrate 62.

It should be noted that when the droplet size is controlled by controlling the amount of deformation of the piezoelectric substrate 62 based on the drive frequency applied to the piezoelectric substrate 62, the droplet size becomes largest when the piezoelectric substrate 62 is driven at a drive frequency that matches the natural frequency of vibration of the piezoelectric substrate 62. Therefore, control can be performed such that the droplet size becomes smaller as the applied drive frequency deviates from the natural frequency of vibration. Furthermore, when the droplet size is controlled by controlling the amount of deformation of the piezoelectric substrate 62 based on the voltage applied to the piezoelectric substrate 62, control can be performed such that the droplet size becomes larger as the voltage applied to the piezoelectric substrate 62 becomes higher.

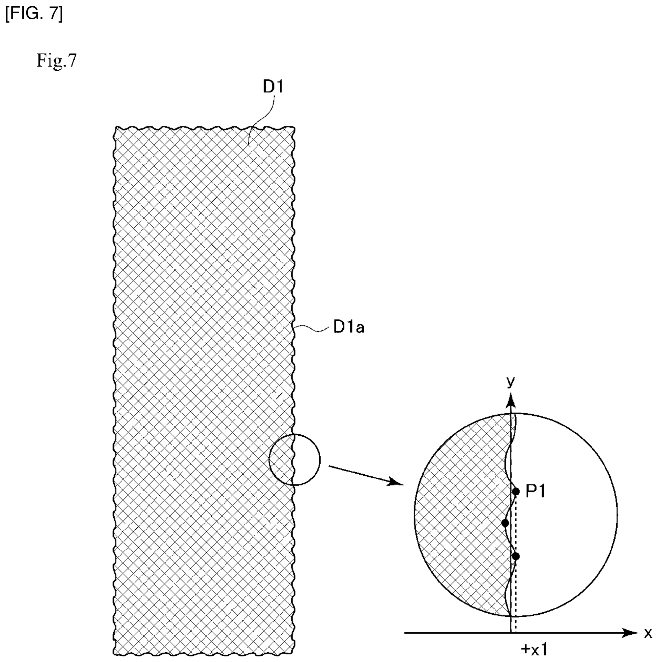

The main control unit 100 is a portion that transmits predetermined control signals to the robot arm control unit 70, the painting material supply control unit 80, and the head control unit 90 described above so that painting is performed on the object to be coated through cooperation of the motors M1 to M6, the painting material supply part 40, and the piezoelectric substrate 62. It should be noted that the main control unit 100 comprises a memory 101, and the measurement image data D1 (see FIG. 7) acquired by the three-dimensional scanner 140 is stored in this memory 101. However, the measurement image data D1 acquired by the three-dimensional scanner 140 may also be stored in the memory 220 of the image processing device 200, without providing such a memory 101.

The scanner control unit 110 controls activation of the three-dimensional scanner 140. The scanner control unit 110 may be substituted for by, for example, the main control unit 100 within the control unit that constitutes the control system of the painting robot 10.

Furthermore, the position sensor 120 is a sensor that detects the current position of the painting head 53. As such a position sensor 120, various types of sensors, such as a rotary encoder, a resolver, a laser sensor, and others can be used. Furthermore, the tilt sensor 130 is a sensor that detects the tilt angle of the painting head 53. As such a tilt sensor 130, various types of sensors, such as, for example, a gyro sensor, an acceleration sensor, etc. can be used.

It should be noted that in the present embodiment, a vibration sensor 150, which is different from the position sensor 120 and the tilt sensor 130 described above, may be provided. The vibration sensor 150 is preferably attached to any portion of the painting head unit 50 so as to detect vibration in the three-dimensional scanner 140 (the painting head 53).

Furthermore, the painting robot 10 comprises a three-dimensional scanner 140. The three-dimensional scanner 140 is a sensor that enables acquisition of height (thickness) data in addition to acquisition of planar two-dimensional data. Examples of such a three-dimensional scanner 140 include a LiDAR scanner, a laser scanner, photogrammetry, and others. It should be noted that the three-dimensional scanner 140 corresponds to the image acquisition means.

The three-dimensional scanner 140 is attached, for example, to the painting head unit 50. Therefore, when acquiring three-dimensional data of the painting portion, described later, the robot arm R1 is activated. However, the three-dimensional scanner 140 may also be provided separately from the painting head unit 50. As such a configuration, for example, the three-dimensional scanner 140 may be provided at a predetermined portion of a robot arm R1 that is separate from the painting head unit 50. Furthermore, a configuration may be adopted in which a dedicated arm for attaching the three-dimensional scanner 140 to the painting robot 10 is provided, and the three-dimensional scanner 140 is attached to the arm.

Furthermore, the painting system 1 is provided with an image processing device 200. The image processing device 200 comprises an image processing unit 210 and a memory 220.

The image processing unit 210 is a portion that generates image data for each painting path, which is a path along which the painting head 53 performs painting.

Furthermore, the memory 220 is a portion that stores image data and other data, such as storing measurement image data D1 transmitted from the main control unit 100 and storing painting data for correction C1 generated by the image processing unit 210.

It should be noted that the image processing device 200 corresponds to, for example, a computer, and the computer may be a component of the painting robot 10 or may be provided separately from the painting robot 10. When the image processing device 200 is provided separately from the painting robot 10, data transmission and reception are performed between the image processing device 200 and the painting robot 10 by wired communication or wireless communication. It should be noted that even if the image processing device 200 is provided separately from the painting robot 10, it may be included in the concept of the painting robot 10, or may alternatively not be included in the concept of the painting robot 10.

### (2. Regarding control for generating painting data for correction during painting and performing painting)

Next, in the painting system 1 and the painting robot 10 having the configuration as described above, control for generating painting data for correction during painting and for performing painting will be described. It should be noted that the painting data for correction is image data for painting that reflects the vibration state (amplitude of vibration, frequency, wavelength, etc.) of the painting head 53 so as to suppress deviation in the landing positions of droplets due to vibration of the painting head 53.

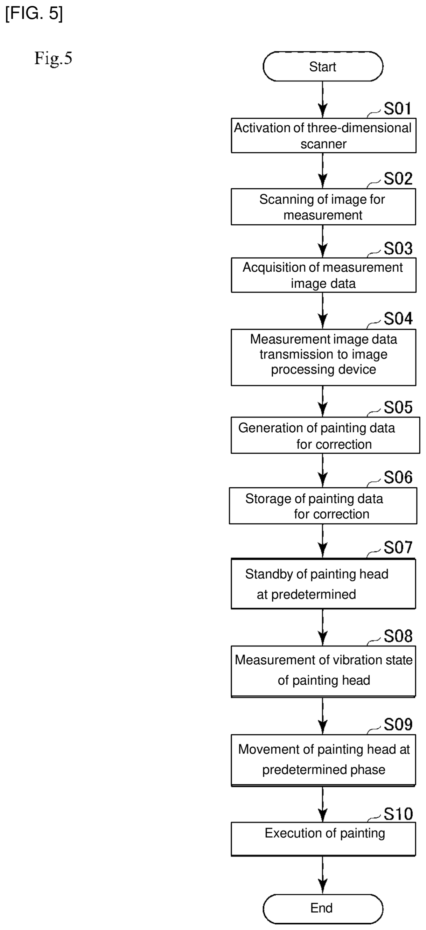

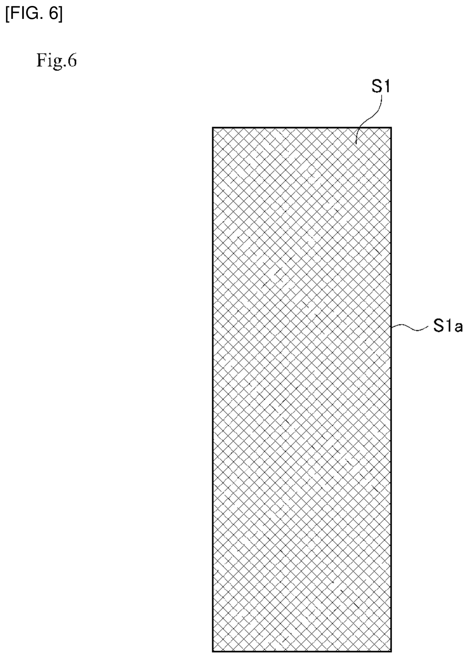

Control when generating such painting data for correction will be described based on the flowchart in FIG. 5. First, the main control unit 100 gives a command to the robot arm control unit 70 to read an image for measurement S1 as shown in FIG. 6 with the three-dimensional scanner 140, and activates the three-dimensional scanner 140 (step S01). As a result, the robot arm R1 is activated, and the three-dimensional scanner 140 attached to the painting head 53 scans the image for measurement S1 (step S02).

Here, an example of the image for measurement S1 is shown in FIG. 6. It should be noted that the image for measurement S1 is an already coated portion that is imaged during scanning with the three-dimensional scanner 140. The image for measurement S1 has an elongated rectangular shape in the state shown in FIG. 6, but the shape may be of any type. Furthermore, the image for measurement S1 may have irregularities in the thickness direction.

For such an image for measurement S1, as shown in FIG. 6, in response to a command from the main control unit 100, the robot arm control unit 70 activates the robot arm R1, and the scanner control unit 110 activates the three-dimensional scanner 140. Then, the image for measurement S1 is scanned with the three-dimensional scanner 140 to acquire measurement image data D1 as shown in FIG. 7 (step S03).

In the measurement image data D1, the current physical state of the painting head 53 (the viscosity of the painting material due to air temperature and pressure, the mechanical characteristics of each portion of the painting robot 10, etc.) is reflected as vibration.

Here, in the image for measurement S1 shown in FIG. 6 described above, the edge S1a thereof is linear. Therefore, when no vibration occurs in the painting head 53, if the image for measurement S1 is scanned with the three-dimensional scanner 140 attached to the painting head 53, in the measurement image data D1 (see FIG. 7) obtained by the scanning, the edge D1a thereof should be linear.

However, due to the effect of vibration of the robot arm R1 and other parts, vibration often occurs in the painting head 53. For this reason, the vibration of the painting head 53 is reflected in the measurement image data D1 obtained by scanning with the three-dimensional scanner 140, for example, as shown in FIG. 7. At this time, when moving along the edge D1a of the measurement image data D1, for example, in a direction (vertical direction in FIG. 7) corresponding to the direction in which the painting head 53 scans (primary scanning direction), a waveform shape that oscillates with a predetermined period is obtained.

It should be noted that in the measurement image data D1 shown in FIG. 7, the direction (vertical direction in FIG. 7) corresponding to the direction in which the painting head 53 scans (primary scanning direction) is defined as the y direction, and the direction (horizontal direction in FIG. 7) corresponding to the secondary scanning direction orthogonal to the primary scanning direction is defined as the x direction. At this time, in the measurement image data D1, the effect of vibration of the painting head 53 is reflected primarily in the x direction. However, in the measurement image data D1, the effect of vibration may also be reflected in the y direction (vertical direction in FIG. 7), which is the primary scanning direction, or in the z direction, which is the thickness direction (this aspect will be described later).

As described above, when the effect of vibration is reflected in the measurement image data D1, if droplets of a painting material are ejected from the nozzles 54 of the painting head 53 based on image data for painting, the landing positions will deviate by an amount corresponding to the effect of the vibration.

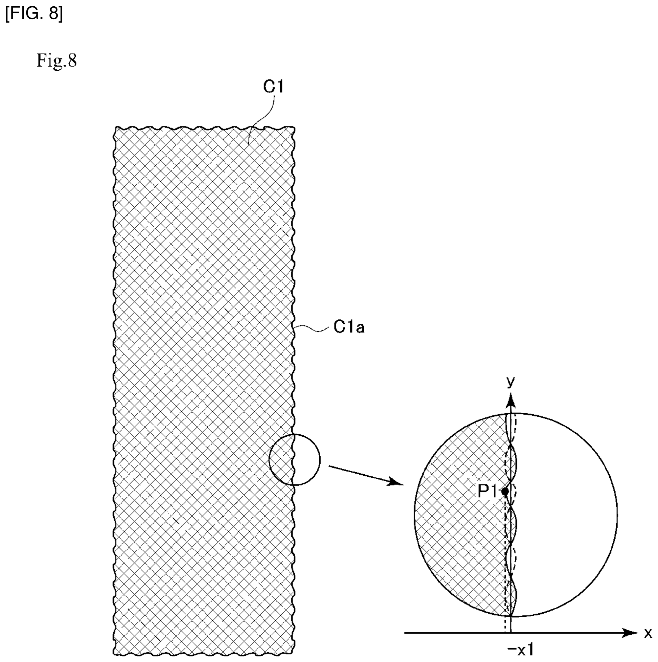

Therefore, in order to eliminate such deviation, the main control unit 100 transmits the acquired measurement image data D1 as shown in FIG. 7 to the image processing device 200 (step S04). Then, the image processing unit 210 of the image processing device 200 performs image processing (correction) on the image data for painting to eliminate the deviation in the landing positions of the painting material described above, and as a result, generates painting data for correction C1 as shown in FIG. 8 (step S05). In the painting data for correction C1 shown in FIG. 8, correction (image processing) is performed on the image data for painting so as to apply vibration in reverse phase to the vibration whereof the effect has occurred in the measurement image data D1.

Here, when the measurement image data D1 is acquired by scanning the image for measurement S1, a case will be considered where at a predetermined position P1 of the image for measurement S1, a positional deviation of +x1 occurs due to the effect of vibration (see FIG. 7). Here, the case will be considered where a painting portion having the same shape as the image for measurement S1 is to be formed. Here, in the painting data for correction C1, processing is performed to shift the position by -x1 in order to eliminate the positional deviation of +x1 at the predetermined position P1 described above. That is, the painting data for correction C1 to be used for painting is generated so as to apply vibration in reverse phase to the vibration occurring in the measurement image data D1.

The painting data for correction C1 generated as described above is transmitted from the image processing device 200 to the main control unit 100, and the painting data for correction C1 is stored in the memory 101 (step S06). Then, in the painting robot 10, in response to a command from the main control unit 100, the robot arm control unit 70 controls the activation of the robot arm R1 so as to move the painting head 53 to a predetermined position to be coated. Furthermore, in response to a command from the main control unit 100, the painting material supply control unit 80 ejects droplets from the nozzles 54 based on the painting data for correction C1. That is, painting is performed on the painting portion (step S10).

It should be noted that, as described above, positional deviation may occur even when painting data for correction C1 has been generated. That is, in the case of regular painting that does not take into account the effect of vibration, the precision of the landing positions of the droplets can be improved by measurement with the position sensor 120, etc. However, when vibration is occurring, even when attempting to land droplets at the same position, positional deviation of +x1 occurs at time t1 when the amplitude of the vibration is +x1, and positional deviation of -x2 occurs at another time t2 when the amplitude of the vibration is -x2, and thus the position cannot be determined solely by position measurement with the position sensor 120 or the like.

Furthermore, when vibration is occurring in the painting head 53, it is also normally unknown at what timing in the vibration state the painting head 53 started to move.

Therefore, when actually performing painting, the following may be done. That is, when starting painting, the painting head 53 is made to stand by at a predetermined standby position (step S07). Then, in the standby state of the painting head 53 at the standby position, a sensor such as the tilt sensor 130 (or the vibration sensor 150 when the vibration sensor 150 is present) measures the vibration state of the painting head 53 (step S08).

In such vibration measurement, when the vibration of the painting head 53 reaches a predetermined phase, the robot arm control unit 70 activates the robot arm R1 to move the painting head 53 to the painting portion (step S09). Doing so makes it possible to suppress the effect of vibration from being amplified instead of being eliminated as originally intended during painting with the painting head 53.

It should be noted that in the vibration measurement of step S08, it is preferable to adjust the movement speed of the painting head 53 based on the frequency measured in the measurement of the vibration state in step S08. When adjusting the movement speed of the painting head 53 in this manner, it becomes possible to suppress deviation of the phase of the painting data for correction C1 that was generated so as to be in reverse phase to the vibration state of the painting head 53.

Furthermore, it is rare for the vibration of the painting head 53 to vibrate only in the x direction, which is the secondary scanning direction, and the vibration equation normally has an x-direction component, a y-direction component, and a z-direction component in the three-dimensional xyz space.

Therefore, when generating the painting data for correction C1 so as to apply vibration in reverse phase to the vibration occurring in the measurement image data D1, it is preferable to perform correction (image processing) of the measurement image data D1 to generate the painting data for correction C1 so as to apply vibration in reverse phase to the vibration in each direction, not only for the x-direction component but also for the y-direction component and the z-direction component. In this way, by generating the painting data for correction C1 so as to apply vibration in reverse phase to the vibration in each of the x-direction, y-direction, and z-direction occurring in the measurement image data D1, the effect of vibration during painting can be reduced also in the y-direction, which is the primary scanning direction, and in the z-direction, which is the thickness direction.

Furthermore, in cases where the vibration state in the painting head 53 extends to the edge of the painting portion, if painting data that causes droplets to be ejected from all the nozzles 54 was generated during regular painting with no vibration state, it may become impossible to eliminate the vibration state of the painting head 53. This is because there may be situations in which, due to the vibration of the painting head 53, a state may occur where the nozzles 54 are not present (are not positioned) at the portion that was originally supposed to be coated.

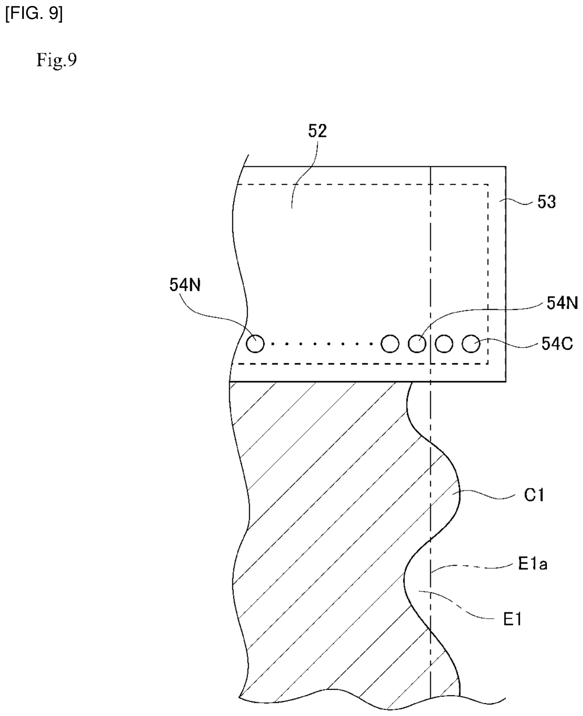

Therefore, when generating the painting data for correction C1 for use in painting with the image processing device 200 (the image processing unit 210), as shown in FIG. 9, the nozzles 54 within a predetermined range from the ends in the secondary scanning direction are designated as nozzles for correction 54C. Moreover, the nozzles 54 positioned more toward the center of the painting head 53 than the predetermined range from the ends in the secondary scanning direction are designated as nozzles for regular painting 54N.

Then, in the image processing by the image processing device 200 (image processing unit 210), a state is established where the edge E1a of the painting data E1, which is data for performing painting on the painting portion when the painting head 53 is not in a vibration state, does not extend to the nozzles for correction 54C. Furthermore, the painting data for correction C1 to be used for painting is generated so that the vibration at the edge E1a of the painting data E1 will be accommodated by the nozzles for correction 54C. By doing so, during vibration of the painting head 53, the amplitude of the vibration can be accommodated by the nozzles for correction 54C.

### (3. Modified examples)

An embodiment of the present invention was described above, but the present invention can be variously modified beyond the above embodiment. Modified examples will be described below.

In the embodiment described above, a case is described in which a three-dimensional scanner 140 is used as the image acquisition means. However, the image acquisition means is not limited to the three-dimensional scanner 140. For example, a two-dimensional camera using a CCD (Charge-Coupled Device) sensor or a CMOS (Complementary Metal Oxide Semiconductor) sensor, or a line sensor capable of scanning in a predetermined direction may be used.

Furthermore, with regard to the three-dimensional scanner 140, for example, when a configuration is adopted in which three-dimensional data can be acquired by combining multiple ordinary cameras capable of acquiring two-dimensional data, the combination of the multiple cameras would correspond to the three-dimensional scanner 140 referred to in the present invention.

Furthermore, in the embodiment described above, there may be cases where it is estimated that the vibration state of the painting head 53 has changed, for example, due to some abnormal factor, such as the occurrence of abnormal motor vibration. Therefore, when measurement image data D1 as shown in FIG. 7 is newly acquired, the new measurement image data D1 can be compared with measurement image data D1 acquired in the past and used for abnormality detection.

Furthermore, in the embodiment described above, when the newly acquired measurement image data D1 is analyzed, it is also possible to detect abnormal values such as clearly large amplitudes compared to the measurement image data D1 acquired in the past. The detection of such abnormal values may be used for example for abnormality detection, such as for having the painting robot 10 issue an alert, and painting may be stopped based on such abnormality detection. Thereby, painting in an abnormal state may be avoided, and the probability of success of painting utilizing the painting data for correction C1 may be improved.

### (4. Supplementary notes)

The content set forth in the embodiment described above may be understood, for example, as follows.
[1] Namely,
   a painting system 1 that performs painting on a predetermined portion of a vehicle, comprising:
   a painting head unit 50 comprising a painting head 53 having multiple nozzles 54 that eject droplets of a painting material;
   a robot arm R1 which has the painting head unit 50 mounted on its distal end and which moves the painting head unit 50 to a desired position;
   a three-dimensional scanner 140 (image acquisition means) which acquires painting data of a painting portion on which painting has been performed with the painting head 53; and
   a control unit (main control unit 100, robot arm control unit 70, head control unit 90, scanner control unit 110) that controls activation of the three-dimensional scanner 140 (image acquisition means) and controls activation of the painting head 53 and the robot arm R1;
   wherein the control unit (main control unit 100, robot arm control unit 70, head control unit 90, main control unit 100):
      activates the three-dimensional scanner 140 (image acquisition means) to acquire measurement image data D1 that reflects a vibration state of the three-dimensional scanner 140 (image acquisition means) by scanning an image for measurement S1 with the three-dimensional scanner 140 (image acquisition means) prior to execution of painting;
      generates painting data for correction C1 based on the measurement image data D1 acquired by the three-dimensional scanner 140 (image acquisition means), for the purpose of eliminating deviation in the landing positions of the droplets ejected from the painting head 53; and
      performs driving control of the robot arm R1 and the painting head 53 based on the painting data for correction C1.

In this way, by generating the painting data for correction C1 for the purpose of eliminating deviation in the landing positions based on the vibration state (fluctuation) from measurement of the vibration state (fluctuation) of the three-dimensional scanner 140 (image acquisition means), it becomes possible to eliminate deviation in the landing positions of the droplets ejected from the painting head 53. As a result, high-definition painting from which the effect of the vibration state (fluctuation) has been eliminated becomes possible.

[2] Furthermore, in the above embodiment, in addition to the content set forth under [1] above,
the image acquisition means may be a three-dimensional scanner 140 that acquires three-dimensional painting data of the painting portion; and
the control unit (main control unit 100, robot arm control unit 70, head control unit 90, scanner control unit 110) may generate painting data for correction C1 for eliminating deviation in the landing position in the planar direction at the painting portion as well as deviation in the landing position in the thickness direction at the painting portion, based on measurement of the image for measurement S1 prior to execution of painting.

In this way, by using the three-dimensional scanner 140 as the image acquisition means and generating the painting data for correction C1 based on measurement of the image for measurement S1 with the three-dimensional scanner 140, it becomes possible to eliminate not only deviation in the landing position of the droplets in the planar direction of the painting portion but also deviation in the landing position of the droplets in the thickness direction of the painting portion. Therefore, high-definition painting from which the effect of the vibration state (fluctuation) has been eliminated three-dimensionally becomes possible.

[3] Furthermore, in the above embodiment, in addition to the content set forth under [1] and [2] described above, or a combination thereof,
the three-dimensional scanner 140 (image acquisition means) may be fixed to the painting head 53.

In this way, as a result of the three-dimensional scanner 140 being fixed to the painting head 53, it becomes possible to measure the vibration state of the painting head 53 with high precision. Accordingly, deviation in the landing position based on the vibration state (fluctuation) can be predicted with high precision, and high-definition painting from which the effect of fluctuation has been eliminated becomes possible.

[4] Furthermore, in the above embodiment, in addition to the content set forth under any one of [1] to [3] described above, or a combination thereof,
the control unit (main control unit 100, robot arm control unit 70, head control unit 90, scanner control unit 110) may generate said painting data for correction in reverse phase to the vibration state.

In this way, by generating the painting data for correction C1 in reverse phase to the vibration state, high-definition painting from which the effect of the vibration state (fluctuation) has been eliminated becomes possible.

[5] Furthermore, in the above embodiment, in addition to the content set forth under any one of [1] to [4] described above, or a combination thereof,
in cases where the effect of the vibration state extends to an edge of the painting portion, in the range of the nozzle forming surface 52 of the painting head 53 where nozzles 54 are present, the nozzles 54 within a predetermined range from the ends in the secondary scanning direction of the painting head 53 may be used as nozzles for correction 54C, and the nozzles 54 located more toward the center of the painting head 53 than said predetermined range may be used as nozzles for regular painting 54N; and
the control unit (main control unit 100, robot arm control unit 70, head control unit 90, scanner control unit 110) may:
   generate the painting data for correction C1 such that, when it has been determined that the painting head 53 is not in the vibration state, a state is maintained in which the edges of the painting data, which is data for performing painting on the painting portion, do not extend to the nozzles for correction 54C,
   and vibration at the edges of the painting data is accommodated by the nozzles for correction 54C.

When performing painting in this manner, although painting of the painting portion is performed by ejection of droplets from the nozzles for regular painting 54N, by performing painting using the nozzles 54 on the outer side as nozzles for correction 54C, when the painting head 53 vibrates, the amplitude of the vibration can be accommodated by the nozzles for correction 54C. Therefore, it becomes possible to satisfactorily eliminate the effect of deviation in the landing positions of the droplets.

### [Description of reference symbols]

1... painting system, 10... painting robot, 20... robot main body, 21... base, 22a... first axis of rotation, 22b... second axis of rotation, 22c... third axis of rotation, 22d... fourth axis of rotation, 22e... fifth axis of rotation, 22f... sixth axis of rotation, 23... leg part, 24... first turning arm, 25... second turning arm, 26... rotary arm, 27... wrist part, 40... painting material supply part, 41... supply passage, 42... return flow passage, 50... painting head unit, 52... nozzle forming surface, 53... painting head, 54... nozzle, 54C... nozzle for correction, 54N... nozzle for regular painting, 55... nozzle row, 55A... first nozzle row, 55B... second nozzle row, 62... piezoelectric substrate, 70... robot arm control unit (corresponds to a portion of the control unit), 71... memory, 80... painting material supply control unit, 90... head control unit (corresponds to a portion of the control unit), 100... main control unit (corresponds to a portion of the control unit), 101... memory, 110... scanner control unit (corresponds to a portion of the control unit), 120... position sensor, 130... tilt sensor, 140... three-dimensional scanner, 150... vibration sensor, 200... image processing device, 210... image processing unit, 220... memory, C1... painting data for correction, D1... measurement image data, D1a... edge, E1... painting data, E1a... edge, M1 to M6... motor, R1... robot arm, S1... image for measurement, S1a... edge

## Claims

1. A painting system comprising a painting robot that performs painting on a painting portion of a vehicle, the painting system being **characterized in that** it comprises:
a painting head unit comprising a painting head having multiple nozzles that eject droplets of a painting material;
a robot arm which has said painting head unit mounted on its distal end and which moves the painting head unit to a desired position;
an image acquisition means which acquires painting data of the painting portion on which painting has been performed with said painting head; and
a control unit that controls activation of said image acquisition means and controls activation of said painting head and said robot arm;
wherein said control unit:
activates said image acquisition means to acquire measurement image data that reflects a vibration state of said image acquisition means by scanning an image for measurement with said image acquisition means prior to execution of painting;
generates painting data for correction based on said measurement image data acquired by said image acquisition means, for the purpose of eliminating deviation in the landing positions of the droplets ejected from said painting head; and
performs driving control of said robot arm and said painting head based on the painting data for correction.

2. The painting system according to claim 1,
**characterized in that** said image acquisition means is a three-dimensional scanner that acquires three-dimensional painting data of said painting portion; and
said control unit generates said painting data for correction based on measurement of said image for measurement prior to said execution of painting for the purpose of eliminating deviation of said landing positions in a planar direction of said painting portion and deviation of said landing positions in a thickness direction of said painting portion.

3. The painting system according to claim 1,
**characterized in that** said image acquisition means is fixed to said painting head.

4. The painting system according to claim 1,
**characterized in that** said control unit generates said painting data for correction in reverse phase to said vibration state.

5. The painting system according to claim 1,
**characterized in that** in cases where the effects of said vibration state extends to an edge of the painting portion, in the range of the nozzle forming surface of said painting head where nozzles are present, the nozzles within a predetermined range from the ends in a secondary scanning direction of said painting head are used as nozzles for correction and the nozzles located more toward the center of said painting head that the predetermined range are used as nozzles for regular painting;
wherein said control unit generates said painting data for correction such that,
when it has been determined that said painting head is not in said vibration state, a state is maintained in which the edges of the painting data, which is data for performing painting on said painting portion, do not extend to said nozzles for correction,
and vibration at the edges of said painting data is accommodated by said nozzles for correction.
